**Europäisches Patentamt**

**European Patent Office**

**Office européen des brevets**

(19)

(11) Veröffentlichungsnummer : **0 426 890 B1**

(12) # EUROPÄISCHE PATENTSCHRIFT

(45) Veröffentlichungstag der Patentschrift :
**23.12.92 Patentblatt 92/52**

(51) Int. Cl.$^5$ : **C03C 27/06, E06B 3/66**

(21) Anmeldenummer : **89120589.0**

(22) Anmeldetag : **07.11.89**

(54) **Kraftschlüssige Verbindung zweier glasklarer Platten im Randbereich.**

(43) Veröffentlichungstag der Anmeldung :
**15.05.91 Patentblatt 91/20**

(45) Bekanntmachung des Hinweises auf die
Patenterteilung :
**23.12.92 Patentblatt 92/52**

(84) Benannte Vertragsstaaten :
**CH DE FR LI**

(56) Entgegenhaltungen :
**FIRMENSCHRIFT Fa. RÖHM GbmH, Werkstattmitteilungen 3, Fügen, Blatt 6, Januar 1985;
"Klebetechnik für Kleblöser, Kleblacke und
Polymerisationsklebstoffe"**

(73) Patentinhaber : **LEIFHEIT Aktiengesellschaft
Leifheitstrasse
W-5408 Nassau/Lahn (DE)**

(72) Erfinder : **Ohm, Heinz Josef
Grosser Ring 5
W-6250 Limburg/Lahn (DE)**
Erfinder : **Papzien, Klaus
Kaltbachstrasse 38 b
W-5408 Nassau/Lahn (DE)**
Erfinder : **Pätzold, Dieter
Scheubachweg 7
W-5408 Nassau/Lahn (DE)**

EP 0 426 890 B1

**Beschreibung**

Die Erfindung bezieht sich auf eine kraftschlüssige Verbindung zweier glasklarer Platten gemäß dem Oberbegriff des Anspruchs 1.

Um die Festigkeit zu erhöhen, aus wärme- und/ oder schalltechnischen Gründen und aus optischen Gründen werden häufig zwei glasklare Platten zu einer Doppelplatte mit einem Luftzwischenraum zusammengefügt. Die Anwendungsgebiete für derartige Platten sind vielseitig. Das bekannteste Einsatzgebiet sind die Doppelscheiben bei Isolierfenstern. Dabei verschwindet die Verbindung beider Platten hinter einem Rahmen, so daß das optische Aussehen der Verbindung beider Platten keine allzugroße Rolle spielt. Dagegen soll die Plattenverbindung zum Beispiel bei rahmenlosen Caravan-Fenstern optisch einwandfrei sein. Um dies zu erreichen, ist es bekannt, die beiden Platten im Randbereich mit einem glasklaren Kebstoff zu verkleben. Die möglichen Techniken sind dazu in der Broschüre der Firma Röhm "Klebetechnik für Kleblöser, Kleblacke und Polymerisatonsklebstoffe Werkstattmitteilungen 3 Fügen, Blatt 6 Januar 1985" beschrieben. Es hat sich nun in der Praxis gezeigt, daß es der größten Sorgfalt bedarf, einwandfreie Klebeverbindungen zu schaffen. Insbesondere ist es äußerst schwierig, die Verklebung luftblasenfrei zu gestalten. Eine andere Schwierigkeit liegt darin, daß es nur schwer gelingt, den Kleber auf eine definierte Klebefläche zu beschränken. Dies trifft sowohl bei der Kapillarmethode unter Verwendung von Kleblöser als auch bei der Klebetechnik mit Polymerisationsklebstoffen zu.

Aufgabe der Erfindung ist es, eine kraftschlüssige Verbindung zweier glasklarer Platten mittels eines Klebstoffes zu erreichen, wobei die Verklebung frei von Luftblasen ist und die Klebefläche exakt vorherbestimmbar definiert verläuft.

Diese Aufgabe wird mit den kennzeichnenden Merkmalen des Anspruchs 1 gelöst. Dabei wurde entgegen der Lehre aus der oben aufgeführten Werkstattmitteilung die Kapillarmethode auf eine Verklebung mit Polymerisationsklebstoff angewendet. Durch das Einfüllen des Polymerisationsklebstoffes in einen Depotraum wird erreicht, daß der Filmspalt, er hat bevorzugt eine Breite von 0,3 mm, vollgesaugt wird, ohne daß der Klebstoff mit Luft vermischt werden kann. Durch die Abgrenzung des Filmspaltes mittels der Dichtleiste ist eine exakte Begrenzung der Verklebung gewährleistet. Die Verklebung ist als solche nicht zu erkennen.

Weitere Ausgestaltungen der Erfindung sind den Unteransprüchen zu entnehmen. So wird die Füllung des Filmspaltes noch verbessert, wenn der Depotraum relativ hoch ausgeführt wird, um den statischen Druck zu erhöhen. Durch Abschneiden des Depotraumes nach dem Aushärten des Klebstoffes wird eine Optik erreicht, als ob es sich um eine einzige, homogene Platte handeln würde.

Fertigungstechnisch ist es besonders vorteilhaft, und dies trifft natürlich insbesondere für die Verbindung von Platten aus Kunststoff zu, wenn der Depotraum und die Dichtleiste durch Tiefziehen gebildet werden.

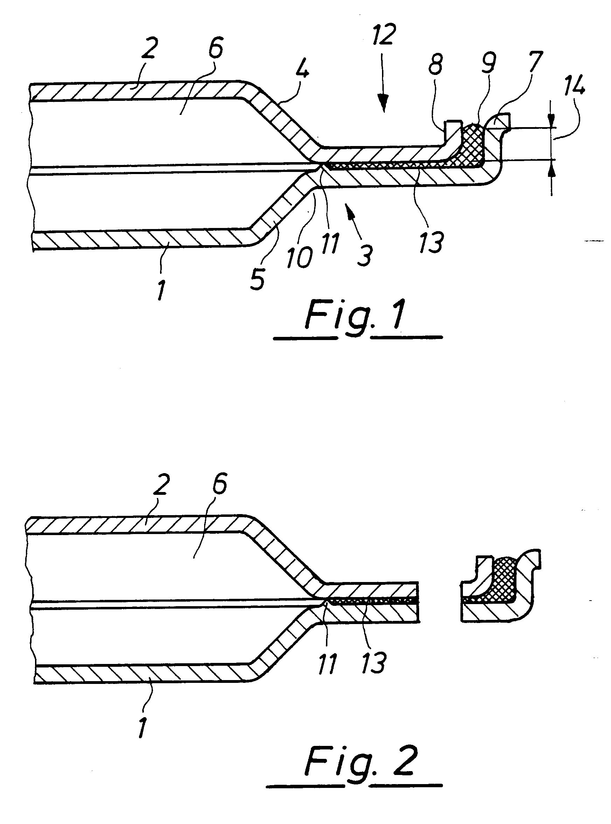

Die Erfindung wird an Hand der beiden Figuren 1 und 2 näher erläutert.

Eine erste Platte 1 und eine zweite Platte 2 sollen im Randbereich 3 miteinander verbunden werden. Die Platten 1 und 2 sind jeweils mit einer Abkröpfung 4 versehen, um einen Luftzwischenraum 6 zu bilden. Die Außenbereiche 7 und 8 der Platten 1 und 2 sind hochgestellt und bilden dadurch einen Depotraum 9. Weiter ist die erste Platte 1 kurz vor dem Übergang 10 zur Abkröpfung 5 mit einer Dichtleiste 11 versehen.

zum Verkleben werden die beiden Platten 1 und 2 aufeinander gelegt und mit geringem Druck, der durch den Pfeil 12 gekennzeichnet ist, aneinandergedrückt, so daß die Dichtleiste 11 sicher an der zweiten Platte 2 anliegt. Danach wird der Depotraum 9 mit einem Polymerisationsklebstoff gefüllt. Durch die Kapillarwirkung wird der Polymerisationsklebstoff in den Filmspalt 13 gezogen und durch die Dichtleiste 11 gestoppt. Im Depotraum 9 verbleibt ein Restdepot 14 an Polymerisationsklebstoff, das verhindert, daß Luft in den Filmspalt 13 nachgesaugt wird. Nach dem Aushärten des Polymerisationsklebstoffes werden die Außenbereiche 7 und 8 mit dem Depotraum 9 abgetrennt. Es entsteht eine optisch homogene Doppelscheibe. Diese kann sowohl aus Glas als auch aus den Kunststoffen PMMA (Polymethylmethacrylat), SAN (Styrol-Acrylnitril-Copolymer), PC (Polycarbonat), PVC (Polyvenylchlorid), PS (Polystyrol) bestehen.

**Patentansprüche**

1. Kraftschlüssige Verbindung zweier glasklarer Platten (1, 2) im Randbereich (3) unter Bildung eines Luftzwischenraumes (6) nach Art einer Doppelscheibe, wobei ein flüssiger Klebstoff über die Kapillarmethode in einen Filmspalt (13), gebildet aus dem planparalell liegenden Randbereich (3) der Platten (1, 2), eingebracht wird, dadurch gekennzeichnet, daß die Außenbereiche (7, 8) der Randbereiche (3) der Platten (1, 2) versetzt hochgestellt sind, dabei einen Depotraum (9) für den Klebstoff bildend, und daß der Filmspalt (13) im Innebereich durch zumindest eine Dichtleiste (11) abgeschlossen ist, die beim Verkleben durch leichten Druck (12) an der zweiten Platte (2) anliegt, und daß in dem Depotraum (9) zumindest die Menge Polymerisationsklebstoff eingebracht wird, die dem Filmspaltvolumen plus Schwundmaß des Polymerisationsklebstoffes entspricht.

**2.** Kraftschlüssige Verbindung nach Anspruch 1, dadurch gekennzeichnet, daß der Depotraum (9) zumindest doppelt so hoch wie breit ist.

**3.** Kraftschlüssige Verbindung nach Anspruch 1 oder 2, dadurch gekennzeichnet, daß nach dem Aushärten des Polymerisationsklebstoffes der Depotraum (9) abgetragen wird.

**4.** Kraftschlüssige Verbindung, nach einem der Ansprüche 1 bis 3, dadurch gekennzeichnet, daß der Depotraum (9) und die Dichtleiste (11) durch Tiefziehen gebildet werden.

**Claims**

**1.** Non-positive bonding of two transparent plates (1, 2) in the edge region (3), forming an intermediate air space (6), in the manner of double glazing, a liquid adhesive being introduced by means of the capillary method into a film gap (13), formed by the plane-parallel edge region (3) of the plates (1, 2), characterised in that the outer regions (7, 8) of the edge regions (3) of the plates (1, 2) are positioned upright in an offset manner, thereby forming a depot space (9) for the adhesive, and in that the film gap (13) is closed off in the inner region by at least one sealing strip (11), which during adhesive bonding bears against the second plate (2) due to slight pressure (12), and in that in the depot space (9) there is introduced at least the quantity of polymerisation adhesive which corresponds to the film gap volume plus the shrinkage allowance of the polymerisation adhesive.

**2.** Non-positive bonding according to Claim 1, characterised in that the depot space (9) is at least twice as high as it is wide.

**3.** Non-positive bonding according to Claim 1 or 2, characterised in that, after curing of the polymerisation adhesive, the depot space (9) is removed.

**4.** Non-positive bonding according to one of Claims 1 to 3, characterised in that the depot space (9) and the sealing strip (11) are formed by deep drawing.

**Revendications**

**1.** Assemblage indissociable de deux plaques transparentes (1, 2) dans leur région de bord (3), formant un espace intermédiaire rempli d'air (6) à la manière d'une double vitre, une colle fluide étant amenée par la méthode capillaire dans un mince interstice de l'épaisseur d'un film (13) formé dans la région de bord (3) des plaques (1, 2) et à plans parallèles, caractérisé en ce que les régions externes (7, 8) des régions de bord (3) des plaques (1, 2) sont coudées vers le haut en formant ainsi une enceinte de réserve (9) pour la colle, en ce que le mince interstice (13) est fermé dans sa région interne par au moins une nervure d'étanchéité (11) qui se dispose lors du collage et après application d'une légère pression (12) contre la seconde plaque (2), et en ce qu'on met dans l'enceinte de réserve (9) la quantité de colle de polymérisation qui correspond au moins au volume du mince interstice plus la masse non utilisée de la colle de polymérisation.

**2.** Assemblage indissociable selon la revendication 1, caractérisé en ce que l'enceinte de réserve (9) a une hauteur qui est au moins le double de sa largeur.

**3.** Assemblage indissociable selon la revendication 1 ou 2, caractérisé en ce qu'on retire l'enceinte de réserve (9) après durcissement de la colle de polymérisation.

**4.** Assemblage indissociable selon l'une quelconque des revendications 1 à 3, caractérisé en ce que l'enceinte de réserve (9) et la nervure d'étanchéité (11) sont formées par emboutissage profond.

_Fig. 1_

_Fig. 2_